# EUROPEAN PATENT SPECIFICATION

(11) **EP 2 861 916 B1**
(45) Date of publication and mention of the grant of the patent: **12.04.2017**
(21) Application number: 13737410.4
(22) Date of filing: 29.05.2013
(51) Int. Cl.: F24J 2/54, F24J 2/52

(54) **A SUPPORTING DEVICE FOR PHOTOVOLTAIC PANELS IN TRACKING PHOTOVOLTAIC SYSTEMS**
TRAGEVORRICHTUNG FÜR SOLARPANEELE BEIM NACHFÜHREN VON PHOTOVOLTAIKANLAGEN
DISPOSITIF DE SUPPORT POUR PANNEAUX PHOTOVOLTAÏQUES DANS DES SYSTÈMES PHOTOVOLTAÏQUES DE POURSUITE

(30) Priority: 31.05.2012 IT PD20120174
(43) Date of publication of application: 22.04.2015
(73) Proprietor: Convert Tech S.r.l., 00142 Roma (IT)
(72) Inventor: DE CATALDO, Marco, I-00159 Roma (IT); MORO, Giuseppe, I-00186 Roma (IT); TIMIDEI, Antonio, I-00142 Roma (IT)
(74) Representative: Locas, Davide
(86) International application number: PCT/IB2013/054425
(87) International publication number: WO 2013/179233

(56) References cited:
- EP-A1- 2 128 540
- DE-A1-102010 004 905
- DE-U1- 8 222 977
- KR-A- 20100 115 569

## Description

### SPECIFICATION

The present invention relates to a supporting device for photovoltaic panels in tracking photovoltaic systems according to the preamble of the invention.

Typically, a tracking photovoltaic system comprises a plurality of photovoltaic panels aligned to form one or a plurality of rows which may rotate about an axis of rotation in the case of single-axis tracking systems, or about two axes in the case of dual-axis tracking systems.

This rotary movement is intended to enable the panel to be optimally oriented with respect to the solar rays throughout the day, in order to maximize energy production.

The panel may be rotated by means of electric motors or motor-driven hydraulic or electric actuators which move the panel as a function of predetermined optimizing algorithms. An example of the application of these algorithms in single-axis systems is disclosed in European Patent Application EP 2 204 853 in which the angular position of the panels is defined as a function of the date, time and geographical position of the system, which parameters make it possible accurately to pinpoint the current position of the sun with respect to the system.

It will therefore be appreciated that the system has to be correctly and accurately positioned in order to ensure the correct functioning of these algorithms which regulate its tracking capacity.

Moreover, as these systems are typically formed by a plurality of rows formed by a plurality of adjacent panels which are caused to rotate rigidly with one another, the centres of rotation of the panels have to be aligned with one another. It is therefore necessary to align the supports so that all the hinges to which the panels are connected are aligned along the same line. It will be readily appreciated that these alignment problems become more critical in the case of surfaces on which systems are installed that are not planar, for instance a surface with a gradient.

These problems mean that the supporting structures for the panels are not always able to ensure an installation of the system that is stable and accurate enough for the above-mentioned purposes.

For instance, US Patent Specification 5 228 924 or International Patent Application WO 2007/128401 disclose a single-axis tracking photovoltaic system in which the panels are supported by a series of stands that simply bear on a surface. It will be appreciated that this solution is unable to ensure correct positioning of the system unless the installation surface is prepared in a very precise way and each stand is installed with extreme care.

Moreover, the solution disclosed in these patents also requires a large quantity of material, in particular steel, to construct the supporting structure. In addition, these supporting structures are typically formed by a series of beams connected by welding, which operation has to take place remotely, thereby increasing the transport and labour costs required.

An alternative solution is represented by single-shaft support structures which are secured to the ground on foundations. Examples of these structures are disclosed in International Patent Application WO 2011/163563 or European Patent Application EP 2 031 323.

These solutions nevertheless require a suitable cement foundation, whose use is, however, prohibited by many local and national regulations.

Moreover, photovoltaic systems typically have a limited service life and have to be removed and possibly replaced after a few years. The use of cement foundations thus has the further drawback that it makes the removal of systems very problematic.

As an alternative to cement foundations, it is thus known to use poles driven into the ground which make the system very stable and do not entail the problems discussed above.

However, this solution may also have substantial drawbacks as it does not enable accurate positioning of the poles and inevitably leads, therefore, to errors in the installation of the system.

As a result, after the supporting structure has been installed, the tracking mechanism has to be adjusted to take account of the actual positioning of the system and, in particular, errors in the alignment or verticality of the support poles. As explained above, tracking systems require precise alignment of the centres of rotation of the panels disposed in the same row.

Although supporting structures for solar panels which offer some possibility of adjustment are known, these structures are not able to be used in systems of large dimensions that comprise many poles disposed in a row in order to support a photovoltaic surface of large dimensions. The known adjustment systems are also relatively complex from a structural point of view and that has a non-negligible impact on the production costs of the system.

Examples of supporting structures are disclosed in particular in German Utility Model DE 8 222 977, in German Patent Application DE 10 2010 004905 or in European Patent Application EP 2 128 540 which disclose a supporting device for photovoltaic panels according to the preamble of claim 1.

The technical problem that the present invention therefore seeks to solve is one of providing a system for the installation of tracking photovoltaic systems which makes it possible to remedy the above-mentioned drawbacks of the prior art.

That problem is resolved by the supporting device according to claim 1.

Preferred features of the present invention are disclosed in the corresponding dependent claims.

The present invention has a number of significant advantages. Its main advantage is that the device of the present invention allows, without requiring cement foundations, for simple and accurate installation of large-dimension photovoltaic systems which thus require many supports in a row, even on surfaces which are not completely planar, thereby avoiding the need for complex stages of adjustment and regulation to enable the system to function correctly.

The device of the present invention also has a particularly simple structural configuration which does not require complex processing operations or include many welded components. At the same time, the quantity of material needed, in particular steel, is very small in comparison with known solutions of equal robustness and ease of installation.

Lastly, the removal of the system, once its service life has come to an end, may be carried out in a relatively simple manner.

Other advantages, features and methods of use of the present invention are set out in the following detailed description of embodiments thereof, given by way of non-limiting example. Reference is made to the accompanying drawings, in which:
- Figs. 1A and 1B are both side views, in two different operating configurations, of the supporting device of the present invention used in a single-axis tracking photovoltaic system;
- Figs. 2A and 2B are both partial front views of the device of the present invention in the operating configurations of Fig. 1A and Fig. 1B respectively;
- Figs. 3A and 3B are both front views of a connecting member, provided with a relative actuator, of the device of the present invention in the operating configurations of Fig. 2A and Fig. 2B respectively;
- Figs. 3C and 3D are both details of the connecting member of Fig. 3B;
- Fig. 4 is a partial front view of the device of the present invention;
- Figs. 5 and 5A are a partial side view and a view in cross-section of a supporting upright forming part of the device of the present invention;
- Fig. 6 is a side view of the connecting member of Fig. 2A;
- Figs. 7 and 7A are a front view and a relative detail of the connecting member of Fig. 6;
- Fig. 8 is a side view diagrammatically showing the movement capacity of the device of the present invention;
- Fig. 9 is a side view of a second embodiment of the connecting member of the present invention;
- Figs. 10 and 10A are a front view and a relative detail of the connecting member of Fig. 9.

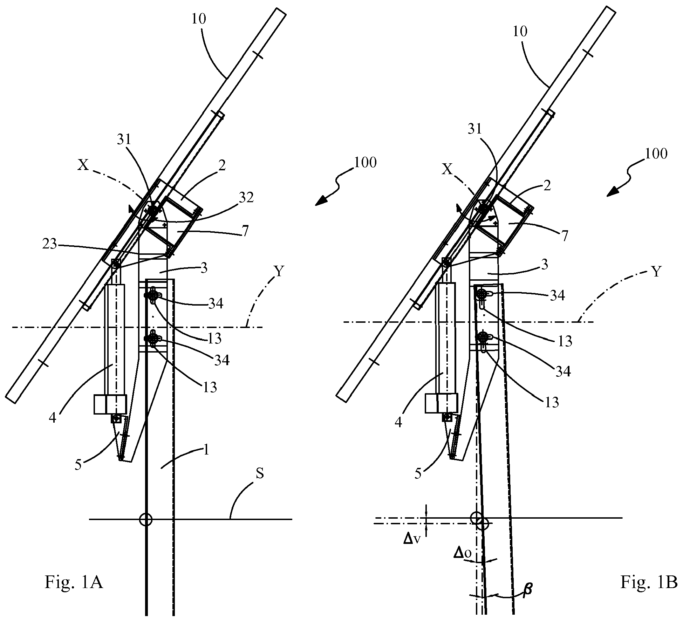

With reference first to Fig. 1, a supporting device for photovoltaic panels in tracking photovoltaic systems is shown overall by reference numeral 100.

The device 100 makes it possible to mount and support one or a plurality of panels 10 of a photovoltaic system, only the essential components of which are shown in the drawings, so that the panels can rotate about a tracking axis X and may be kept raised from an installation surface S typically formed by the ground on which the system is installed.

The drawings show only one supporting device, but it will be appreciated that a series of adjacent devices may be used to support a row of panels 10. In any case, the choice of the number of devices to be used and their dimensions are within the purview of a person skilled in the art and are not therefore described in further detail below.

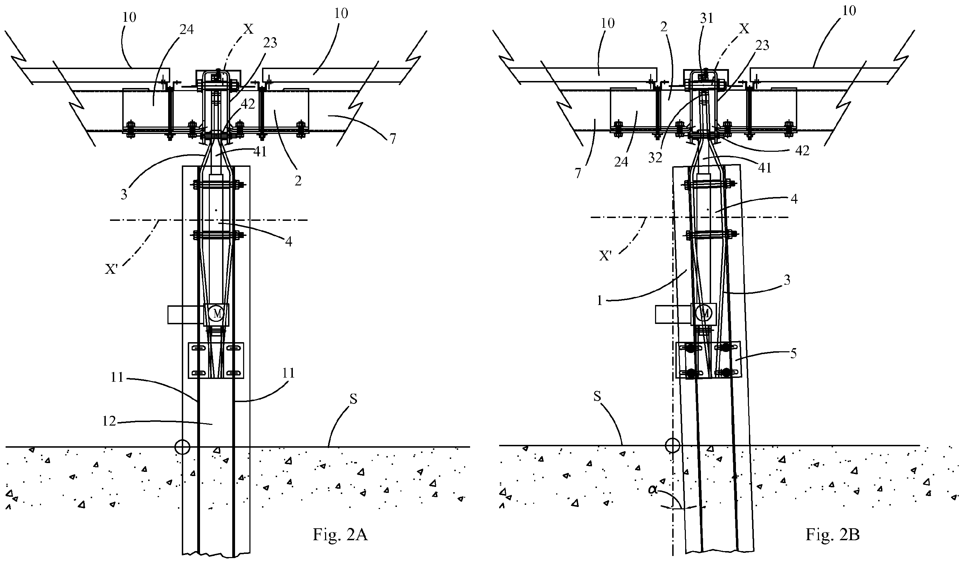

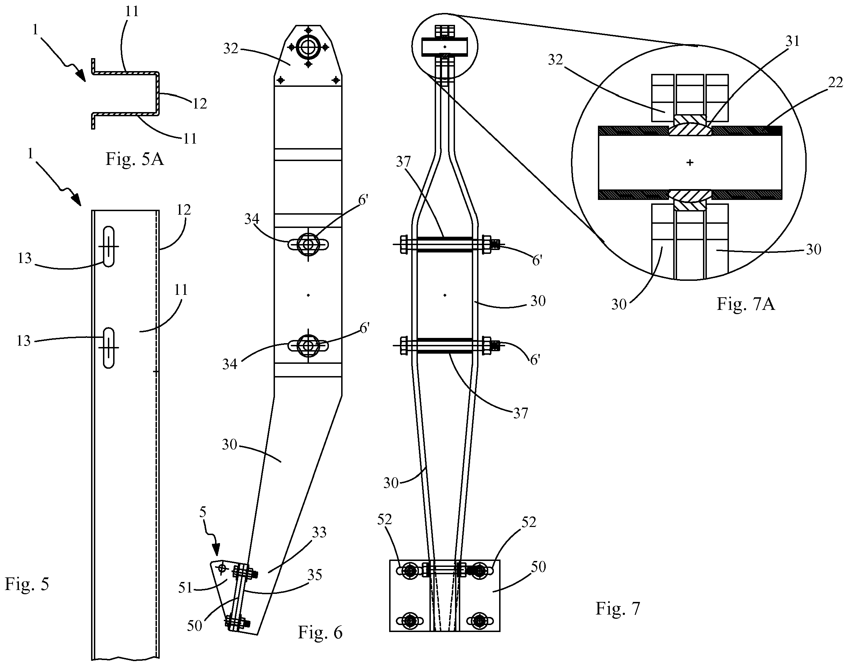

The device 10 comprises a supporting upright 1, best shown in Figs. 2A and 5, of substantially longitudinal extension in a direction I and of substantially C-shaped cross-section.

In other words, as can be seen from Figs. 2A and 5, the upright 1 comprises two side walls 11 and a base wall 12 which define a cavity associated with the C-shaped cross-section.

The upright 1 is driven into the ground which, as mentioned above, forms the installation surface S, by driving or a like method, to a depth sufficient to ensure the stable positioning of the system.

As will be described below, as a result of the device of the present invention, the positioning of the uprights 1 in the ground does not require the use of foundations or particular members intended to ensure that they are precisely vertical.

A connecting member 3 is disposed between the two side walls 11 and makes it possible to connect the upright 1 to a fixing plate 2 on which the panel 10 is fixed.

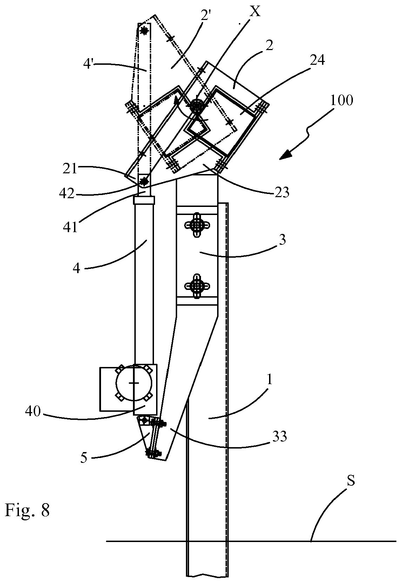

The plate 2 is connected in a rotary manner to the connecting member 3 at its end 32 by means of a rolling member 31 whose features will be described in further detail below. In this way, by means of a motor-driven linear actuator, or other movement means, the inclination of the panel 10 about the axis X may be varied, by means of methods that will be described in further detail below, so as to enable the solar radiation tracking movement. The methods of movement of the plate 2 are shown diagrammatically in Fig. 8. In the present embodiment, use is in particular made of a linear actuator which is hinged at a fixed end 40 on the end 33 of the connecting member 3 opposite the end 32 to which the plate 2 is connected in a rotary manner. The shaft 41 of the actuator 4 is also hinged on the plate 2, and spaced from the rolling member 31, such that a linear displacement of the shaft 41 causes the plate 2 to rotate, in other words generating a movement of the crankshaft kind. Again with reference to Fig. 8, reference numerals 2' and 4' respectively show the plate and the piston in the limit position associated with the maximum extension of the actuator.

With further reference to Figs. 1A and 2A, the connecting member 3 may be connected to the supporting upright 1 in an adjustable manner and may, in particular, be disposed such that it is misaligned by an angle β with respect to the direction I of longitudinal extension of the upright 1, as shown in Fig. 2B.

To that end, as shown in Figs. 5 and 6, the connecting member 3 and the upright 1 are connected by means of a bolt 6', or any like connecting means, preferably reversible, which passes through holes 13, 34 respectively in the side walls 11 of the upright 1 and shaped plates 30 of the connecting member 3 that face them.

The holes 13 and 34 are in particular of elongated shape and are disposed such that the main directions of extension of the holes 13 and 34 are substantially perpendicular or, more generally, incident with respect to one another.

In this way it is possible to connect the upright 1 and the connecting member 3 in different relative positions, and the two components may be locked in a determined position by tightening the bolts 6'. In particular, the use of holes of a greater diameter than the diameter of the bolt stem thus provides the connection between the holes and the bolt with a certain play.

It will be appreciated that although the holes 13 and 34 in the present embodiment have an elongated shape, different shapes could also be used to obtain this adjustment capacity. For instance, there could be only one hole, on the upright or on the connecting member, of a shape able to allow the connecting member to move in rotation about the axis X or, more generally, about an adjustment axis X' parallel thereto, and to move in translation at least along the vertical axis. As a further alternative, the holes could be of circular shape with a greater diameter than the stems of the bolts, associated with washers of sufficient dimensions so that the tightening of the bolts acts on the side walls 11 of the upright 1 in order to lock the connecting member 3 with the desired inclination β, and aligned spatially with the other supporting devices used in a row of panels.

It is therefore evident that, in this way, as shown in Fig. 1B, any errors in the perpendicular nature or positioning of the upright 1 with respect to the surface S or, more generally, errors with respect to a desired installation position, may be corrected by varying the relative position between the hole 13 and the hole 34.

The use of holes 13 and 34 with a main direction of extension perpendicular to one another also means that the relative positioning of the connecting member 3 with respect to the upright 1 may be adjusted within a plane, making it possible to compensate for positioning errors by displacements in the vertical direction Δv and the horizontal direction Δo and rotations of angle β.

With reference to Figs. 2A and 2B, the connecting member 3 also enables the device of the present invention to correct errors of inclination of the upright with respect to a further axis of adjustment Y, perpendicular to the axis X and to the direction of longitudinal extension of the upright 1.

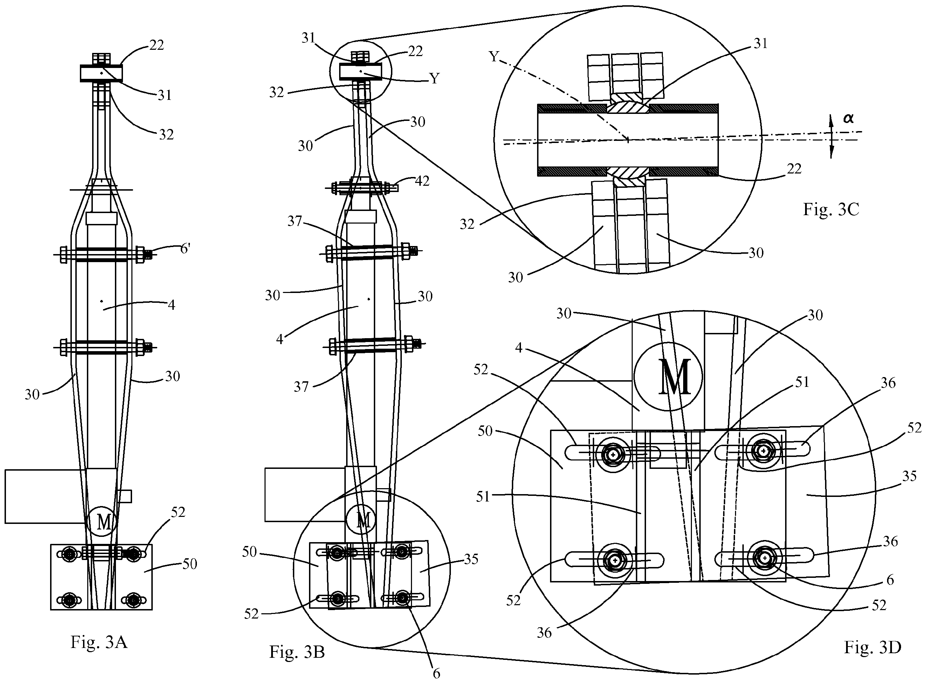

As shown in detail in Figs. 3A-D and 6, the connecting member 3 comprises, at its end closest to the surface S, a connecting plate 35 which is connected to a flange 5 on which the actuator 4 is hinged.

The flange 5 is in turn formed by a support plate 50 and transverse wings 51, in which a seat is provided in order to house a pin which enables a rotary connection with the actuator about an axis parallel to the axis X.

As is shown in detail in Fig. 3D, both the connecting plate 35 and the fixing plate 50 comprise respective holes 52, 36 also of elongated shape and extending predominantly in a direction parallel to the axis X in which respective bolts 6 are located, which, in the same way as described above with reference to the connection between the connecting member 3 and the upright 1, make it possible to lock the plates 35, 50 in a determined relative position.

In this case as well, the stems of the bolts 6 are housed with play within the holes 36, 52, so as to enable at least a movement of rotation about an adjustment axis Y, perpendicular to the direction of extension of the upright and the tracking axis X, between the connecting member 3 and the actuator 4.

It should be noted that, in the following description, the holes 36 and 52 provided in the connection between the connecting member 3 and the actuator 4, are also described as first holes, while the holes 13 and 34 provided for the connection between the connecting member 3 and the upright 1 are also described as second holes.

This rotary movement makes it possible to adjust the orientation of the fixing plate 2 and therefore of the photovoltaic panel 10 as well.

As can be seen from Figs. 2A, 2B and 8, the shaft of the actuator is connected to the plate by a pin 42 which allows, apart from the inevitable play present, only rotations about the axis of the pin and therefore perpendicular to the direction of longitudinal extension of the shaft 41.

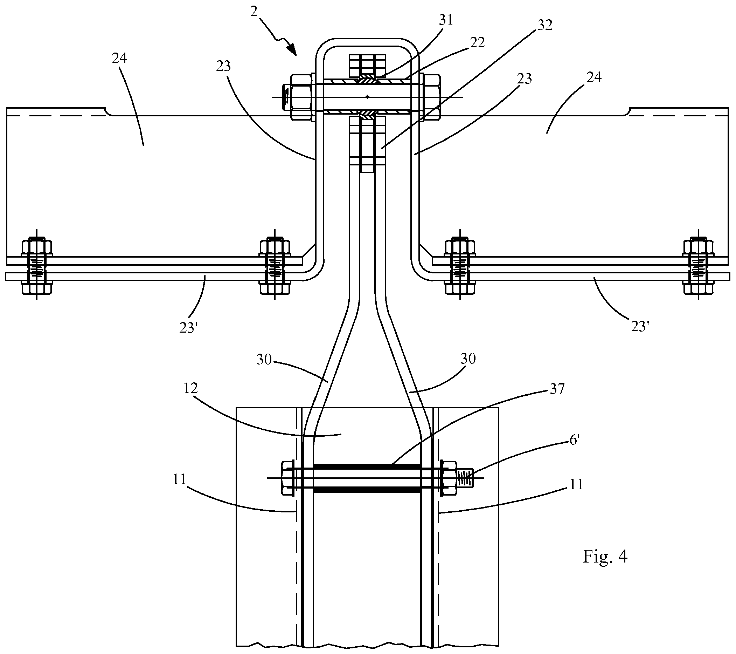

In contrast, as shown in Figs. 3C and 4, the rolling member 31, used at the end 32 of the connecting member 3 and the plate 2, comprises a spherical joint 31 which thus enables relative rotations between a bushing 22 on which the fixing plate 2 is supported and the connecting member 3 substantially about three orthogonal axes.

Any errors in the orientation of the upright 1 may thus be corrected by causing the flange 5, and therefore the actuator 4, the plate 2 and the panel 10, to rotate by an angle α corresponding to the error between the upright 1 and the connecting member 3. In this way, the panel 10 and the surface S may be made fully parallel or disposed at another desired orientation.

In this way, by means of the rotations about the adjustment axes Y and X', which will be also be described below as the first and second adjustment axes Y and X', it is possible to adjust the inclination of the panel 10 with respect to the surface S, thus requiring less accuracy in the installation of the upright 1 which may therefore also be readily driven into the ground.

The device of the present invention is also particularly advantageous in that it may be formed by a series of components that may be simply assembled directly at the place of installation of the system, thereby reducing production and storage costs for the manufacturer of the system.

In particular, with reference to Fig. 4, it can be seen that the connecting member 3 is advantageously formed by two shaped plates 30, spaced by spacer members 37 at a central portion of the plates 30.

At the ends 32 and 33, the plates 30 are closer to one another so as to enable the rolling member 31 to be housed at the end 32 and the plate 35 secured at the end 33.

This solution makes it possible to ensure the robustness and stability needed to ensure that the tracking movement is fully accurate and, at the same time, makes it possible to limit the number of components used and the quantity of material needed.

Again with reference to Fig. 4, the plate 2 is formed by two lateral flanks 23, that may rotate on the rolling member 31 and on the pin 42 of the shaft 41, so as to enable the above-described crankshaft movement, as shown in Fig. 8.

The lateral flanks 23 widen into two end portions 23', on which a further bushing 24 is secured by a bolt connection and within which a crossbar 7 is housed.

The bushing 24 and the respective crossbar 7 have a square or, more generally, non-circular cross-section so as to be able to define a form coupling between them that enables a rotation of the bushing 24 about the axis X to be transferred to the crossbar 7.

The crossbar 7 extends between all the supporting devices of a row of photovoltaic panels 10 of the system so that they all rotate rigidly with one another.

It will be appreciated that, depending on the dimensions of the system and therefore the number of panels forming each row, a plurality of adjacent and spaced supporting devices could be used.

In any case, it will be appreciated that the devices of the present invention make it possible to align all the bushings 24 along a same axis, despite any errors in the driving of the uprights.

Moreover, it is enough to provide the motor-driven actuator 4 for one or only part of the supporting devices, while the plates 2 of the remaining devices are driven in rotation by the crossbar 7.

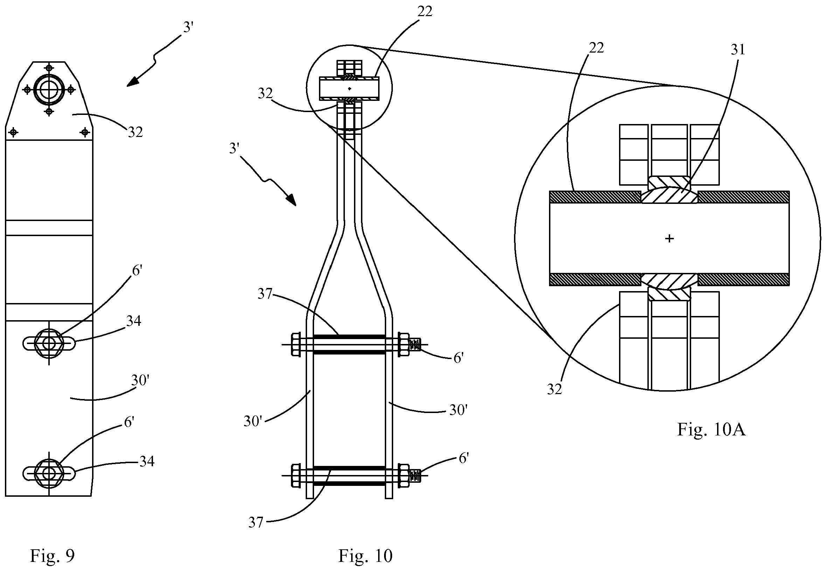

In this case, the connecting member 3', shown in Figs. 9, 10 and 10A, is not provided with the plate 35 and the end 33, thus enabling the use of shaped plates 30' of smaller dimensions than in the embodiment described above.

In other words, the non-motor-driven supporting devices will not be provided with the part below the holes 34, thus obtaining a general saving of material.

Moreover, this solution advantageously makes it possible to simplify the installation of the system, using components that are simple to produce.

Again with a view to simplifying installation, the device of the present invention further comprises a GPS device which enables it to be geographically located and therefore makes it possible automatically to define the parameters that regulate its tracking movement.

In this way, in view of the accuracy of installation offered by the device of the present invention, the system may be immediately operative without requiring long stages of preparation.

The invention thus resolves the proposed problem, and at the same time provides a number of advantages, including the possibility of correcting any alignment or positioning errors that occur when the uprights are being installed. In this way, the uprights may be installed simply by driving. Moreover, the more accurate alignment enabled by the device of the present invention makes it possible to produce tracking photovoltaic systems with a greater number of panels in each row as it is possible to align a greater number of supports than in known systems.

Moreover, the structural form of the tracking system requires very little welding, the number of mechanical parts is small, and most of the weight is concentrated in automatically produced profiled sections. That also minimizes the labour needed to produce the mechanical structures.

These features make it possible in general to produce tracking photovoltaic systems with rows of a length greater than in known solutions, as it is possible to use lighter solutions in which the panels may therefore be more readily rotated, with no restrictions arising from the problems of alignment between the centres of rotation of the panels.

## Claims

1. A supporting device (100) for photovoltaic panels (10) in tracking photovoltaic systems comprising:
▪ at least one supporting upright (1) of substantially longitudinal extension and extending from a surface (S) on which the system is installed;
▪ a fixing plate (2) for the photovoltaic panel (10);
▪ a connecting member (3) between the upright (1) and the plate (2);
in which the connecting member (3):
▪ comprises a rolling member (31) capable of connecting the fixing plate (2) in a rotary manner about a tracking axis (X) about which the panel (10) rotates during the stages of tracking;
and in which the rolling member (31) further enables the fixing plate (2) to rotate at least in a limited manner about a first adjustment axis (Y) substantially orthogonal to the tracking axis (X) and the direction of longitudinal extension (I) of the upright (1);
**characterized in that** the connecting member (3) comprises a connecting plate (35) on which a flange (5) may be secured and may be oriented with respect to the first adjustment axis (Y), said flange (5) being designed to support in a rotary manner a motor-driven actuator (4), connected to the fixing plate (2), in order to move it about the tracking axis (X), wherein the connecting plate (35) and the flange (5) comprise respective first holes (36, 52) within which a first locking member (6) is housed with play so as to enable relative rotations between the flange (5) and the connecting member (3) about the first adjustment axis (Y), said locking member (6) being designed to lock the flange (5) and the connecting member (3) in a determined relative position.

2. A supporting device (100) according to claim 1, wherein the connecting member (3) is attached to the upright (1) such that it may be adjusted about a second adjustment axis (X') substantially parallel to the tracking axis (X) and wherein the rolling member (31) comprises a spherical joint.

3. A supporting device (100) according to any one of the preceding claims, wherein the connecting member (3) is attached to the upright (1) in an adjustable manner within a plane parallel to the direction of longitudinal extension (I) of the upright and perpendicular to the tracking axis (X).

4. A supporting device (100) according to any one of the preceding claims, wherein the rolling member comprises a spherical joint (31).

5. A supporting device (100) according to any one of the preceding claims, wherein the connecting member (3) is supported on the upright (1) in such a way as to keep the panels spaced from the installation surface (S) during the operation of the system.

6. A supporting device (100) according to any one of the preceding claims, wherein the motor-driven actuator is of linear type, wherein a fixed end of said actuator (4) is hinged on the connecting member (3) and a moving shaft (41) of the said actuator (4) is hinged on the plate (2) in a spaced position with respect to the rolling member (31).

7. A supporting device (100) according to any one of the preceding claims, wherein the first locking member comprises a bolt (6).

8. A supporting device (100) according to one of claims 2 to 7, wherein the upright (1) and the connecting member (3) include respective second holes (13, 34) within which a second locking member (6') is housed with play in order to lock the upright (1) and the connecting member (3) in a determined relative position in such a way as to attach the connecting member (3) to the upright (1) so that it may be adjusted about the second adjustment axis (X').

9. A supporting device (100) according to claim 8, wherein the second locking member comprises a bolt (6').

10. A supporting device (100) according to claims 8 or 9, wherein the holes (13, 34) are of elongated shape.

11. A supporting device (100) according to claims 9 and 10, wherein the holes (36, 52) are of elongated shape and predominantly extend in directions that are perpendicular to one another.

12. A supporting device (100) according to one of claims 7 to 11, wherein the holes (13) in the upright (1) are made in the side walls (11) thereof, and the connecting member (3) comprises shaped plates (30) which face the side walls and in which the holes (34) of the connecting member (3) are made.

13. A supporting device (100) according to claim 12, wherein the shaped plates (30) are closer to one another at respective ends (32, 33) so as to enable the rolling member (31) to be housed at a first end (32) and the connecting plate (35) to be secured at a second end (33).

## Patentansprüche

1. Abstützvorrichtung (100) für Sonnenkollektoren (10) in nachgeführten Photovoltaik-Systemen, umfassend:
- zumindest einen Abstützpfosten (1) mit einer wesentlichen Längsausdehnung und der sich von einer Fläche (S) erstreckt, auf der das System angeordnet ist;
- eine Fixierplatte (2) für den Sonnenkollektor (10);
- ein Verbindungselement (3) zwischen dem Pfosten (1) und der Platte (2);
- in dem das Verbindungselement (3) aufweist:
- ein Rollelement (31), das die Fixierplatte (2) drehbar um eine Nachführachse (X) verbinden kann, um die sich der Kollektor (10) während der Nachführphasen dreht;
- und in dem das Rollelement (31) ferner der Fixierplatte (2) ermöglicht, sich zumindest eingeschränkt um eine erste Einstellachse (Y) herum zu drehen, die im Wesentlichen orthogonal zur Nachführachse (X) und der Richtung einer Längsausdehnung (I) des Pfostens (1) ist;
- **dadurch gekennzeichnet, dass** das Verbindungselement (3) eine Verbindungsplatte (35) aufweist, auf der ein Flansch (5) gesichert und bezüglich der ersten Einstellachse (Y) ausgerichtet werden kann, wobei der Flansch (5) ausgebildet ist, um drehbar einen motorbetriebenen Aktuator (4), der mit der Fixierplatte (2) verbunden ist, abzustützen, um sie um die Nachführachse (X) herum zu bewegen, wobei die Verbindungsplatte (35) und der Flansch (5) jeweils erste Öffnungen (36, 52) aufweisen, innerhalb denen ein erstes Verriegelungselement (6) mit Spiel aufgenommen ist, um so relative Drehungen zwischen dem Flansch (5) und dem Verbindungselement (3) um die erste Einstellachse (Y) herum zu ermöglichen, wobei das Verriegelungselement (6) ausgebildet ist, um den Flansch (5) und das Verbindungselement (3) in einer vorbestimmten relativen Position zu verriegeln.

2. Abstützvorrichtung (100) gemäß Anspruch 1, wobei das Verbindungselement (3) am Pfosten (1) befestigt ist, sodass es um eine zweite Einstellachse (X') herum eingestellt werden kann, die im Wesentlichen parallel zur Nachführachse (X) ist, und wobei das Rollelement (31) ein Kugelgelenk aufweist.

3. Abstützvorrichtung (100) gemäß einem der vorhergehenden Ansprüche, wobei das Verbindungselement (3) am Pfosten (1) einstellbar innerhalb einer Ebene befestigt ist, die parallel zur Richtung einer Längsausdehnung (I) des Pfostens und rechtwinklig zur Nachführachse (X) ist.

4. Abstützvorrichtung (100) gemäß einem der vorhergehenden Ansprüche, wobei das Rollelement ein Kugelgelenk (31) aufweist.

5. Abstützvorrichtung (100) gemäß einem der vorhergehenden Ansprüche, wobei das Verbindungselement (3) auf dem Pfosten (1) derart abgestützt ist, um die Kollektoren von der Einbaufläche (S) während des Betriebs des Systems mit Abstand zu halten.

6. Abstützvorrichtung (100) gemäß einem der vorhergehenden Ansprüche, wobei der motorbetriebene Aktuator ein Lineartyp ist, wobei ein fixiertes Ende des Aktuators (4) auf dem Verbindungselement (3) drehbar angeordnet ist und eine bewegliche Welle (41) des Aktuators (4) auf der Platte (2) in einer beabstandeten Position bezüglich des Rollelements (31) drehbar angeordnet ist.

7. Abstützvorrichtung (100) gemäß einem der vorhergehenden Ansprüche, wobei das erste Verriegelungselement einen Bolzen (6) aufweist.

8. Abstützvorrichtung (100) gemäß einem der Ansprüche 2 bis 7, wobei der Pfosten (1) und das Verbindungselement (3) jeweilige zweite Öffnungen (13, 34) umfassen, innerhalb denen ein zweites Verriegelungselement (6') mit Spiel aufgenommen ist, um den Pfosten (1) und das Verbindungselement (3) in einer vorbestimmten relativen Position derart zu verriegeln, um das Verbindungselement (3) am Pfosten (1) zu befestigen, sodass er über die zweite Einstellachse (X') eingestellt werden kann.

9. Abstützvorrichtung (100) gemäß Anspruch 8, wobei das zweite Verriegelungselement einen Bolzen (6') aufweist.

10. Abstützvorrichtung (100) gemäß Anspruch 8 oder 9, wobei die Öffnungen (13, 34) länglich sind.

11. Abstützvorrichtung (100) gemäß Anspruch 9 oder 10, wobei die Öffnungen (36, 52) länglich sind und sich überwiegend in Richtungen erstrecken, die rechtwinklig zueinander sind.

12. Abstützvorrichtung (100) gemäß einem der Ansprüche 7 bis 11, wobei die Öffnungen (13) im Pfosten (1) in zugehörigen Seitenwänden (11) ausgeführt sind, und das Verbindungselement (3) geformte Platten (30) aufweist, die den Seitenwänden zugewandt sind und in denen die Öffnungen (34) des Verbindungselements (3) ausgeführt sind.

13. Abstützvorrichtung (100) gemäß Anspruch 12, wobei die geformten Platten (30) an jeweiligen Enden (32, 33) näher zueinander sind, um so dem Rollelement (31) zu ermöglichen, an einem ersten Ende (32) aufgenommen zu sein, und der Verbindungsplatte (35) zu ermöglichen, um an einem zweiten Ende (33) gesichert zu sein.

## Revendications

1. Dispositif de support (100) pour panneaux photovoltaïques (10) dans des systèmes photovoltaïques de poursuite comprenant :
- au moins un montant de support (1) d'extension sensiblement longitudinale et s'étendant d'une surface (S) sur laquelle le système est installé ;
- une plaque de fixation (2) pour le panneau photovoltaïque (10) ;
- un élément de liaison (3) entre le montant (1) et la plaque (2) ;
dans lequel l'élément de liaison (3) :
- comprend un élément de roulement (31) capable de relier la plaque de fixation (2) de manière rotative autour d'un axe de poursuite (X) autour duquel le panneau (10) tourne pendant les étapes de poursuite ;
et dans lequel l'élément de roulement (31) permet en outre à la plaque de fixation (2) de tourner au moins d'une manière limitée autour d'un premier axe de réglage (Y) sensiblement orthogonal à l'axe de poursuite (X) et à la direction d'extension longitudinale (I) du montant (1) ;
**caractérisé en ce que** l'élément de liaison (3) comprend une plaque de liaison (35) sur laquelle une bride (5) peut être fixée et peut être orientée par rapport au premier axe de réglage (Y), ladite bride (5) étant conçue pour supporter de manière rotative un actionneur entraîné par moteur (4), relié à la plaque de fixation (2), afin de le déplacer autour de l'axe de poursuite (X), dans lequel la plaque de liaison (35) et la bride (5) comprennent des premiers trous respectifs (36, 52) à l'intérieur desquels un premier élément de verrouillage (6) est logé avec jeu de façon à permettre des rotations relatives entre la bride (5) et l'élément de liaison (3) autour du premier axe de réglage (Y), ledit élément de verrouillage (6) étant conçu pour verrouiller la bride (5) et l'élément de liaison (3) dans une position relative déterminée.

2. Dispositif de support (100) selon la revendication 1, dans lequel l'élément de liaison (3) est fixé au montant (1) de manière à pouvoir être réglé autour d'un deuxième axe de réglage (X') sensiblement parallèle à l'axe de poursuite (X) et dans lequel l'élément de roulement (31) comprend un joint sphérique.

3. Dispositif de support (100) selon l'une quelconque des revendications précédentes, dans lequel l'élément de liaison (3) est relié au montant (1) de manière réglable à l'intérieur d'un plan parallèle à la direction d'extension longitudinale (I) du montant et perpendiculaire à l'axe de poursuite (X).

4. Dispositif de support (100) selon l'une quelconque des revendications précédentes, dans lequel l'élément de roulement comprend un joint sphérique (31).

5. Dispositif de support (100) selon l'une quelconque des revendications précédentes, dans lequel l'élément de liaison (3) est supporté sur le montant (1) de manière à maintenir les panneaux espacés de la surface d'installation (S) pendant le fonctionnement du système.

6. Dispositif de support (100) selon l'une quelconque des revendications précédentes, dans lequel l'actionneur entraîné par moteur est de type linéaire, dans lequel une extrémité fixe dudit actionneur (4) est articulée par charnière sur l'élément de liaison (3) et un arbre mobile (41) dudit actionneur (4) est articulé par charnière sur la plaque (2) dans une position espacée par rapport à l'élément de roulement (31).

7. Dispositif de support (100) selon l'une quelconque des revendications précédentes, dans lequel le premier élément de verrouillage comprend un boulon (6).

8. Dispositif de support (100) selon l'une quelconque des revendications 2 à 7, dans lequel le montant (1) et l'élément de liaison (3) comprennent des deuxièmes trous respectifs (13, 34) à l'intérieur desquels un deuxième élément de verrouillage (6') est logé avec jeu afin de verrouiller le montant (1) et l'élément de liaison (3) dans une position relative déterminée de manière à fixer l'élément de liaison (3) au montant (1) de façon à pouvoir le régler autour du deuxième axe de réglage (X').

9. Dispositif de support (100) selon la revendication 8, dans lequel le deuxième élément de verrouillage comprend un boulon (6').

10. Dispositif de support (100) selon les revendications 8 ou 9, dans lequel les trous (13, 34) sont de forme allongée.

11. Dispositif de support (100) selon les revendications 9 et 10, dans lequel les trous (36, 52) sont de forme allongée et s'étendent principalement dans des directions qui sont perpendiculaires l'une à l'autre.

12. Dispositif de support (100) selon l'une quelconque des revendications 7 à 11, dans lequel les trous (13) dans le montant (1) sont réalisés dans les parois latérales (11) de celui-ci, et l'élément de liaison (3) comprend des plaques profilées (30) qui font face aux parois latérales et dans lesquelles les trous (34) de l'élément de liaison (3) sont réalisés.

13. Dispositif de support (100) selon la revendication 12, dans lequel les plaques profilées (30) sont plus proches l'une de l'autre à des extrémités respectives (32, 33) de façon à permettre à l'élément de roulement (31) d'être logé à une première extrémité (32) et à la plaque de liaison (35) d'être fixée à une deuxième extrémité (33).
